# FASCICULE DE BREVET EUROPEEN

(11) **EP 2 820 310 B1**
(45) Date de publication et mention de la délivrance du brevet: **17.10.2018**
(21) Numéro de dépôt: 12706829.4
(22) Date de dépôt: 28.02.2012
(51) Int. Cl.: F15B 11/12, F15B 15/12

(54) **DISPOSITIF À AIR COMPRIMÉ POUR LE CONTRÔLE DE VANNES**
DRUCKLUFTBETÄTIGTE VORRICHTUNG ZUR STEUERUNG VON VENTILEN
COMPRESSED-AIR DEVICE FOR CONTROLLING VALVES

(43) Date de publication de la demande: 07.01.2015
(73) Titulaire: Tadino, Vincent Luc Antoine, 5650 Chastres (BE)
(72) Inventeur: VILLERET, Guillaume, André, René, F-74160 Saint Julien en Genevois (FR)
(74) Mandataire: Coulon, Ludivine
(86) Numéro de dépôt international: PCT/EP2012/053364
(87) Numéro de publication internationale: WO 2013/127439

(56) Documents cités:
- WO-A1-01/12996
- FR-A- 1 416 183
- JP-U- H0 432 304
- US-A- 2 911 956

## Description

La présente invention se rapporte à un dispositif à air comprimé pour le contrôle de vannes comprenant, dans une direction longitudinale, un premier vérin rotatif à palette présentant une face frontale ainsi qu'une face dorsale, ladite face frontale étant munie d'une tête de rotation, et un deuxième vérin rotatif à palette présentant une face frontale ainsi qu'une face dorsale, lesdits premier et deuxième vérins étant chacun alimenté en air comprimé par l'intermédiaire d'une vanne à air comprimé reliées à deux ports sur chacun desdits premier et deuxième vérins, ledit premier vérin rotatif à palette étant agencé pour entraîner en rotation ladite vanne à contrôler entre une première position prédéterminée et une deuxième position prédéterminée en un seul mouvement, et ledit deuxième vérin étant agencé pour décrire un angle depuis une première position jusqu'à une deuxième position en un seul mouvement.

Des dispositifs pour le contrôle de vannes sont connus de l'état de la technique, comme par exemple du document WO 01/12996 ou du document JP H04 32304 U.

Par exemple, le document DE 19756425 décrit un activateur de vanne à air comprimé reposant sur l'utilisation d'un seul vérin à air comprimé comprenant une entrée d'air comprimé, un piston et des ressorts de rappel assurant le retour du piston à sa position initiale lorsque la pression exercée sur le piston est supprimée. Lorsque le piston effectue un mouvement suite à sa mise sous pression, un arbre rotatif dont une extrémité est connectée à une vanne à contrôler est mis en mouvement, ce qui permet de faire tourner ladite vanne à contrôler selon un angle limité à 90°.

Les documents DE 3925887 et JP 8074809 divulguent des activateurs pneumatiques à double action pour le contrôle de vannes. Ces activateurs de vannes sont composés de deux vérins disposés de part et d'autre d'une tête de rotation connectée à ladite vanne à contrôler. Chaque vérin comprend un piston et des ressorts de rappel, les deux vérins étant alimentés en air comprimé par une même entrée. Lorsque les deux vérins sont activés simultanément, ils entraînent, selon un angle de 90°, la rotation d'un arbre rotatif dont une extrémité est connectée à ladite vanne à contrôler.

Malheureusement de tels activateurs de vannes à air comprimé ne tournent que dans un seul sens, ce qui limite fortement les applications liées à leur utilisation. De plus, les systèmes de vannes existants sont encombrants et comportent souvent des composants électroniques qui, s'ils sont placés à proximité d'environnements corrosifs, radioactifs ou humides, n'y résistent pas. Pour éviter ces problèmes, il convient de protéger les éléments électroniques tels que les capteurs, par exemple par des blindages, ce qui a pour inconvénient d'augmenter la taille des activateurs de vannes. De plus, l'alimentation en air comprimé de chacun des vérins est généralement réalisée par plus de deux vannes à air comprimé, ce qui nécessite l'implémentation d'une séquence logique dans le contrôleur de vannes.

L'invention a pour but de pallier les inconvénients de l'état de la technique en procurant un dispositif à air comprimé pour le contrôle de vannes non sensible aux d'environnements corrosifs, radioactifs ou humides, compacts et permettant une rotation dans les deux sens, en un seul mouvement sans avoir à stopper à une position intermédiaire.

Ainsi, pour résoudre ces problèmes, il est prévu suivant l'invention, un dispositif tel qu'indiqué au début, où ledit premier vérin comprend sur sa face dorsale un disque rotatif pourvu d'arrêts fixes et où ledit deuxième vérin comprend sur sa face frontale un disque rotatif pourvu d'une butée, ledit deuxième vérin présentant en outre un couple supérieur à celui dudit premier vérin et lesdits premier et deuxième vérins étant connectés entre eux par emboîtement mutuel, ladite butée dudit disque rotatif dudit deuxième vérin étant agencée pour s'insérer entre lesdits arrêts fixes dudit premier vérin et présentant en outre une largeur étant agencée pour permettre aux arrêts fixes dudit disque rotatif dudit premier vérin d'effectuer une rotation prédéterminée avant d'être bloqués par ladite butée.

On entend par « vérin rotatif à palette », au sens de la présente invention, un vérin composé d'une chambre cylindrique étanche (le corps du vérin) contenant une butée solidaire du corps ainsi qu'un axe sur lequel est fixé une palette qui, en association avec ladite butée, divise ladite chambre cylindrique en un premier et en un deuxième compartiment étanche. Chacun desdits deux compartiments étanches est pourvu d'un port agencé pour permettre l'entrée et la sortie d'air comprimé. Suivant que l'air comprimé est injecté dans l'un ou l'autre desdits deux compartiments étanches, la pression exercée sur ladite palette entraînera une rotation vers la droite ou vers la gauche de l'axe sur lequel est fixée ladite palette. Lorsque de l'air comprimé est injecté dans ledit premier compartiment étanche, l'air contenu dans ledit deuxième compartiment étanche est évacué et vice-versa.

Un tel dispositif selon l'invention permet avantageusement de minimiser l'encombrement des activateurs de vannes puisque les vérins sont placés longitudinalement l'un derrière l'autre. De plus, les vérins rotatifs à palette alimentés en air comprimé ne comportent pas de composants électroniques et sont donc adaptés pour être placés dans des environnements corrosifs et/ou radioactifs sans nécessiter d'encombrants blindages. Contrairement aux activateurs de vannes décrits dans l'état de la technique, le dispositif pour le contrôle de vannes selon l'invention permet une rotation dans les deux sens depuis une première position prédéterminée jusqu'à une deuxième position prédéterminée de ladite vanne à contrôler, ceci en un seul mouvement sans avoir à marquer un arrêt à une position intermédiaire.

Cette rotation dans les deux sens est obtenue en imposant une différence de couple entre ledit premier vérin et ledit deuxième vérin qui sont connectés entre eux par emboîtement mutuel par l'intermédiaire d'arrêts fixes présents sur le disque rotatif dudit premier vérin et d'une butée sur le disque rotatif dudit deuxième vérin, la largeur de ladite butée étant agencée pour permettre aux arrêts fixes d'effectuer une rotation prédéterminée avant de les bloquer. En outre, la différence de couple permet au deuxième vérin, présentant le couple le plus élevé, d'entraîner ou de bloquer ledit premier vérin présentant le couple le plus faible, afin d'atteindre une position recherchée, ladite butée dudit disque rotatif dudit deuxième vérin bloquant ou entraînant lesdits arrêts fixes dudit disque rotatif dudit premier vérin.

De préférence, selon la présente invention, ledit premier vérin rotatif à palette est agencé pour entraîner en rotation ladite vanne à contrôler selon un angle de 180° en un seul mouvement. Ceci est particulièrement avantageux puisqu'il n'est pas nécessaire de marquer un arrêt en position intermédiaire lors d'une rotation de 180° et que la rotation de ladite vanne à contrôler n'est pas limitée à un angle de 90°.

Avantageusement, selon la présente invention, ledit premier vérin rotatif à palette peut marquer un arrêt à une position intermédiaire prédéterminée comprise entre ladite première position prédéterminée et ladite deuxième position prédéterminée de ladite vanne à contrôler. Il est ainsi possible de contrôler la vanne pour qu'elle tourne et s'arrête à n'importe quelle position prédéterminée selon la différence de couple imposée entre les deux vérins rotatifs à palette, selon la position desdits arrêts fixes dudit disque rotatif dudit premier vérin et selon la largeur de ladite butée du disque rotatif dudit deuxième vérin qui permet aux arrêts fixes du disque rotatif dudit premier vérin d'effectuer une rotation prédéterminée avant d'être bloqués par ladite butée.

Préférentiellement, selon la présente invention, ladite position intermédiaire dudit premier vérin est atteinte suite à une rotation depuis une position à 0° jusqu'à une position à 90° ou depuis une position à -90° jusqu'à une position à 0°, dans un repère trigonométrique conventionnel.

De préférence, selon la présente invention, ledit deuxième vérin présente un couple deux fois supérieur à celui dudit premier vérin. Ceci permet au deuxième vérin d'entraîner ou de bloquer ledit premier vérin selon la position à atteindre de ladite vanne à contrôler, ladite butée dudit disque rotatif dudit deuxième vérin bloquant ou entraînant lesdits arrêts fixes dudit disque rotatif dudit premier vérin.

Préférentiellement, ledit disque rotatif dudit premier vérin présente deux arrêts fixes diamétralement opposés tandis que ledit disque rotatif dudit deuxième vérin présente une butée rectangulaire médiane. Un tel agencement de chacun des disques rotatifs desdits premier et deuxième vérins permet leur emboîtement mutuel, les mouvements des deux vérins étant ainsi interdépendants. En effet, non seulement la différence de couple entre lesdits premier et deuxième vérins mais aussi cet emboîtement mutuel particulier permet au dispositif selon l'invention de contrôler ladite vanne en lui faisant effectuer des rotations dans les deux sens et en la stoppant à des positions précises prédéterminées.

Avantageusement, ladite butée rectangulaire médiane dudit disque rotatif dudit deuxième vérin présente une largeur permettant aux arrêts fixes dudit disque rotatif dudit premier vérin d'effectuer une rotation selon un angle de 90° avant d'être bloqués par ladite butée rectangulaire médiane.

De préférence, lesdits disques rotatifs desdits premier et deuxième vérins sont entourés par une enveloppe ou un cache de protection. Ceci permet d'éviter que des éléments de petite taille, par exemple des particules de poussière, ne s'accumulent entre lesdits disques rotatifs, ce qui pourraient empêcher une rotation correcte desdits disques rotatifs.

Dans une forme de réalisation particulière selon l'invention, le dispositif à air comprimé pour le contrôle de vannes est caractérisé en ce que :
- ledit premier vérin rotatif à palette est agencé pour entraîner en rotation ladite vanne à contrôler selon un angle de 180°,
- ledit deuxième vérin est agencé pour décrire un angle de 90°, ledit deuxième vérin présentant par ailleurs un couple deux fois supérieur à celui dudit premier vérin,
- lesdits arrêts fixes dudit disque rotatif dudit premier vérin sont diamétralement opposés, et
- ladite butée dudit disque rotatif dudit deuxième vérin est une butée rectangulaire médiane dont la largeur permet aux arrêts fixes dudit disque rotatif dudit premier vérin d'effectuer une rotation selon un angle de 90° avant d'être bloqués par ladite butée rectangulaire médiane.

Selon cette forme de réalisation particulière, le dispositif à air comprimé pour le contrôle de vannes selon l'invention permet de contrôler ladite vanne en pouvant lui faire effectuer les rotations suivantes en un seul mouvement et sans avoir à marquer un arrêt en position intermédiaire : depuis une position à -90° jusqu'à une position à 0°, depuis une position à 0° jusqu'à une position à 90°, depuis une position à 0° jusqu'à une position à -90°, depuis une position à 90° jusqu'à une position à 0°, depuis une position à -90° jusqu'à une position à 90° et depuis une position à 90° jusqu'à une position à -90°.

D'autres formes de réalisation du dispositif air comprimé pour le contrôle de vannes selon l'invention sont indiquées dans les revendications annexées.

L'invention a aussi pour objet un dispositif de contrôle pour le flux d'un fluide dans une conduite, comprenant
- au moins une vanne localisée dans ladite conduite pour contrôler ledit flux dudit fluide dans ladite conduite, et
- au moins un dispositif à air comprimé pour le contrôle de vannes, chaque dispositif à air comprimé pour le contrôle de vannes
pouvant être respectivement associé à une vanne localisée dans ladite conduite.

Avantageusement, ladite conduite est une cassette à usage unique comprenant au moins une vanne étant agencée pour être fixée à ladite tête de rotation dudit premier vérin d'un dispositif à air comprimé pour le contrôle de vannes selon l'invention.

Par le terme « cassette », on entend, au sens de la présente invention, une conduite où peut s'écouler un fluide et qui est munie d'une série de vannes divisant ladite conduite en une série de sections, lesdites vannes permettant ou non, selon leur positionnement, au fluide de passer d'une section à l'autre de ladite conduite, chaque vanne pouvant en outre diriger ledit fluide vers un élément agencé pour traiter ledit fluide, par exemple vers une colonne de chromatographie, ledit élément pour traiter ledit fluide étant placé perpendiculairement par rapport à l'axe défini par ladite conduite ou étant placé à l'une des extrémités de ladite conduite.

Par les termes « cassette à usage unique », on entend, au sens de la présente invention, une cassette telle que décrite précédemment et qui peut être réutilisée plusieurs fois à condition qu'elle soit soumise à une séquence de nettoyage et de reconditionnement entre deux utilisations successives.

De préférence, ladite fixation de ladite vanne à ladite tête de rotation dudit premier vérin est réalisée par l'intermédiaire d'un élément de liaison solidaire de ladite tête de rotation dudit premier vérin et agencé pour s'emboîter sur ladite vanne à contrôler.

D'autres formes de réalisation du dispositif de contrôle pour le flux d'un fluide dans une conduite selon l'invention sont indiquées dans les revendications annexées.

Un autre objet de la présente invention porte sur une machine de synthèse ou de purification de composés radioactifs agencée pour recevoir une cassette à usage unique et comprenant une unité de contrôle commandant la rotation des vannes depuis une première position prédéterminée jusqu'à une deuxième position prédéterminée, caractérisée en ce qu'elle comprend au moins un dispositif à air comprimé pour le contrôle de vannes tel que décrit précédemment.

La synthèse ou la purification de composés radioactifs est réalisée dans des appareils qui permettent la mise en contact des différents composés chimiques destinés à réaliser une ou plusieurs des étapes suivantes : la purification du radioisotope, son conditionnement pour le préparer à l'étape de marquage, le marquage avec possibilité de chauffage, la pré-purification, la purification des produits obtenus et leur formulation finale.

Des machines de synthèse de radioéléments basées sur l'utilisation de cassettes comprenant des vannes commandées par l'intermédiaire d'une unité de contrôle sont connues. Par exemple, ce type de machine concerne la synthèse de différents composés (liste non exhaustive), par exemple le [¹⁸F]FLT, [¹⁸F]FMiso, [¹⁸F]FET, [¹⁸F]FAcetate, [¹⁸F]FES, [¹⁸F]SFB, [¹⁸F]FDGal, [¹⁸F]Fcholine et, le plus commun, le [¹⁸F]FDG ou 2-[¹⁸F]fluoro-2-désoxy-D-glucose, reposant sur les étapes suivantes : préparation de l'agent de fluoration, marquage du précurseur, pré-purification, hydrolyse en milieu basique et mise en solution injectable. Ces étapes requièrent l'ajout de réactifs à des moments précis et un transfert des solutions obtenues lors de chaque étape vers une zone où pourra avoir lieu l'étape suivante. L'utilisation de cassettes à usage unique présentant une conduite comprenant une série de vannes espacées de façon standard permet de diriger le fluide sous pression en jouant sur l'ouverture et la fermeture de vannes, ce qui permet d'ajouter les réactifs à un moment précis lors du procédé de production et de guider ledit fluide d'une première section de ladite conduite vers une deuxième section en le faisant passer ou non au travers d'un ou de plusieurs éléments agencés pour traiter ledit fluide, lesdites première et deuxième sections étant séparées au moins par une vanne.

La machine de synthèse ou de purification d'éléments radioactifs selon l'invention permet avantageusement d'optimiser le procédé de fabrication non seulement en permettant aux vannes des cassettes jetables de tourner dans les deux sens mais aussi en minimisant la taille des activateurs de vannes. Ceci est particulièrement avantageux puisque la taille des machines peut être réduite, ce qui permet également de minimiser la taille des environnements blindés protecteurs qui sont coûteux. De plus, les vannes permettant au fluide de s'écouler dans les deux sens, vers la droite ou vers la gauche, la machine de synthèse d'éléments radioactifs selon l'invention permet de multiplier les applications possibles.

De préférence, lesdites vannes espacées de façon standard sont positionnées dans ladite conduite à une distance comprise entre 2 et 5 cm, préférentiellement à une distance de 3 cm. Selon l'invention, le diamètre desdits vérins étant inférieur ou égal à 5 cm, de préférence à 3 cm, de telle façon qu'une série de dispositif à air comprimé pour le contrôle de vannes puissent être positionnés de manière adjacente, en parallèle, chaque dispositif à air comprimé commandant une vanne de ladite conduite.

D'autres formes de réalisation de la machine de synthèse ou de purification de composés radioactifs selon l'invention sont indiquées dans les revendications annexées.

D'autres caractéristiques, détails et avantages de l'invention ressortiront de la description donnée ci-après, à titre non limitatif et en faisant référence aux dessins annexés.
La figure 1 illustre le dispositif à air comprimé pour le contrôle de vannes.
La figure 2 illustre la position de chacun des vérins au montage lorsqu'ils ne sont pas alimentés en air comprimé.
La figure 3 illustre la position de chacun des vérins lorsque le système est mis sous pression.
La figure 4 illustre les mouvements rotatifs de chacun des vérins lorsque ladite vanne à contrôler doit effectuer une rotation depuis une première position à 0° jusqu'à une deuxième position à 90°.
La figure 5 illustre les mouvements rotatifs de chacun des vérins lorsque ladite vanne à contrôler doit effectuer une rotation depuis une première position à 90° jusqu'à une deuxième position à 0°.
La figure 6 illustre les mouvements rotatifs de chacun des vérins lorsque ladite vanne à contrôler doit effectuer une rotation depuis une première position à 0° jusqu'à une deuxième position à -90°.
La figure 7 illustre les mouvements rotatifs de chacun des vérins lorsque ladite vanne à contrôler doit effectuer une rotation depuis une première position à -90° jusqu'à une deuxième position à 0°.
La figure 8 illustre les mouvements rotatifs de chacun des vérins lorsque ladite vanne à contrôler doit effectuer une rotation depuis une première position à 90° jusqu'à une deuxième position à -90°.
La figure 9 illustre les mouvements rotatifs de chacun des vérins lorsque ladite vanne à contrôler doit effectuer une rotation depuis une première position à -90° jusqu'à une deuxième position à 90°.
La figure 10 illustre un mode de réalisation du dispositif de contrôle pour le flux d'un fluide dans une conduite.

Sur les figures, les éléments identiques ou analogues portent les mêmes références.

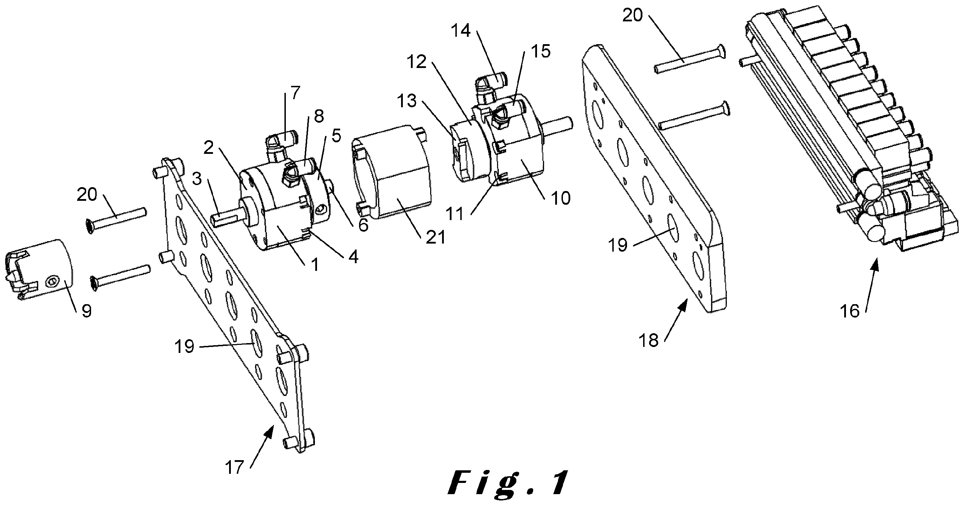

La figure 1 illustre le dispositif à air comprimé pour le contrôle de vannes selon l'invention. Le premier vérin rotatif à palette (1) présente une face frontale (2) qui est munie d'une tête de rotation (3) solidaire de l'axe auquel est fixée la palette à l'intérieur dudit vérin rotatif (1).

Le premier vérin rotatif à palette (1) comprend en outre, sur sa face dorsale (4) un disque rotatif (5) également solidaire de l'axe auquel est fixée la palette à l'intérieur dudit vérin rotatif (1), ledit disque rotatif (5) étant muni de deux arrêts fixes (6). Le premier vérin rotatif à palette (1) est également pourvu de deux ports (7, 8) permettant chacun l'entrée et la sortie d'air comprimé qui est fourni par l'intermédiaire d'un système de vannes à air comprimé (16).

Chaque port (7, 8) communique avec un des deux compartiments étanches à l'intérieur dudit vérin rotatif (1) et lesdits compartiments sont séparés par ladite palette et par une butée interne dans ledit vérin (1) contre laquelle se bloque ladite palette.

Selon que l'air comprimé est injecté dans l'un ou l'autre desdits deux compartiments étanches par l'intermédiaire d'un desdits ports (7, 8), ladite palette sera poussée soit vers la droite, soit vers la gauche et entraînera la rotation dudit disque rotatif (5) et de ladite tête de rotation (3) vers la droite ou vers la gauche. Ladite tête de rotation (3) dudit premier vérin (1) est connectée à un élément de liaison (9) qui est agencé pour s'emboîter sur ladite vanne à contrôler.

Le deuxième vérin (10) présente une face frontale (11) comprenant un disque rotatif (12). Le disque rotatif (12) est solidaire de l'axe auquel est fixée la palette à l'intérieur dudit vérin rotatif (10) et est muni d'une butée rectangulaire médiane (13) dont la largeur permet aux deux arrêts fixes (6) dudit disque rotatif (5) dudit premier vérin (1) d'effectuer une rotation prédéterminée avant de les bloquer. Le deuxième vérin rotatif à palette (10) est en outre pourvu de deux ports (14, 15) permettant chacun l'entrée et la sortie d'air comprimé.

Chaque port (14, 15) communique avec un des deux compartiments étanches à l'intérieur dudit vérin rotatif (10) et lesdits compartiments sont séparés par ladite palette et une butée interne dans ledit vérin (10) contre laquelle se bloque ladite palette.

Selon que l'air comprimé est injecté dans l'un ou l'autre desdits deux compartiments étanches par l'intermédiaire d'un desdits ports (14, 15), ladite palette sera poussée soit vers la droite, soit vers la gauche et entraînera la rotation dudit disque rotatif (12) vers la droite ou vers la gauche.

Ledit premier vérin (1) et ledit deuxième vérin (10) sont connectés par emboîtement mutuel. Ladite butée (13) dudit disque rotatif (12) dudit deuxième vérin (10) est prévue pour s'insérer entre lesdits arrêts fixes (6) dudit premier vérin (1) et présente en outre une largeur permettant aux arrêts fixes (6, 7) dudit disque rotatif (5) dudit premier vérin (1) d'effectuer une rotation prédéterminée avant d'être bloqués par ladite butée (13).

L'emboîtement mutuel des deux vérins rotatifs à palette (1, 10) rend leur mouvements interdépendants. Selon la rotation à effectuer et comme ledit deuxième vérin (10) présente un couple supérieur à celui dudit premier vérin, la butée (13) dudit disque rotatif (12) dudit deuxième vérin (10) peut entraîner la rotation dudit disque rotatif (5) dudit premier vérin (1) en prenant appui contre lesdits arrêts fixes (6) ou peut bloquer ledit disque rotatif (5) dudit premier vérin (1) en bloquant lesdits arrêts fixes (6) présents sur ledit disque rotatif (5) dudit premier vérin (1).

Selon les mouvements rotatifs imposés à chacun desdits premier et deuxième vérins (1, 10) par l'entrée d'air comprimé dans l'un ou l'autre desdits deux compartiments étanches de chacun desdits vérins, la vanne à contrôler sera entraînée en rotation depuis une première position jusqu'à une deuxième position selon un angle défini par la différence de couple entre lesdits deux vérins (1, 10), par la largeur de ladite butée (13) dudit disque rotatif (12) dudit deuxième vérin (10) et par la position desdits arrêts fixes (6) dudit disque rotatif (5) dudit premier vérin (1).

Des plaques (17, 18) présentant des orifices (19) assurent le maintien et le soutien du dispositif à air comprimé pour le contrôle de vannes et des vis (20) permettent la fixation desdits premier et deuxième vérins (1, 10) à ces plaques (17, 18). En outre, un cache de protection (21) est prévu pour entourer lesdits disques rotatifs desdits premier et deuxième vérins (1, 10) afin d'éviter tout encrassement.

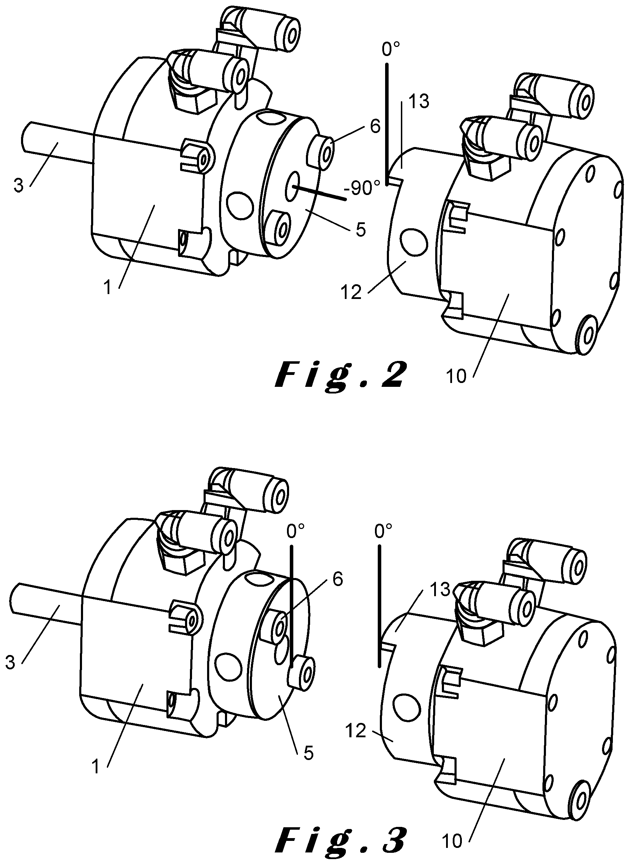

La figure 2 illustre la position de chacun des vérins au montage. Selon cette position au montage et lorsqu'aucun des deux vérins (1, 10) n'est alimenté en air comprimé, ledit premier vérin (1) est positionné à -90° tandis que le second vérin (10) est positionné à 0°.

La figure 3 illustre la position de chacun des vérins (1, 10) lorsque le système est mis sous pression. Suite à cette mise sous pression, lesdits premier et deuxième vérins (1, 10) se positionnent chacun selon leur position par défaut définie par l'emplacement de la butée interne solidaire du corps du vérin. Ainsi, ledit premier vérin (1) effectue une rotation depuis une première position à -90° jusqu'à une deuxième position à 0°.

A cette position de 0°, les arrêts fixes (6) dudit disque rotatif (5) dudit premier vérin (1) sont bloqués contre ladite butée rectangulaire médiane (13) dudit disque rotatif (12) dudit deuxième vérin (10) qui est positionné à 0° selon la position au montage et qui présente un couple deux fois supérieur à celui dudit premier vérin (1). Ainsi, suite à la mise sous pression du dispositif, lesdits premier (1) et deuxième (10) vérins sont tous les deux positionnés à 0°.

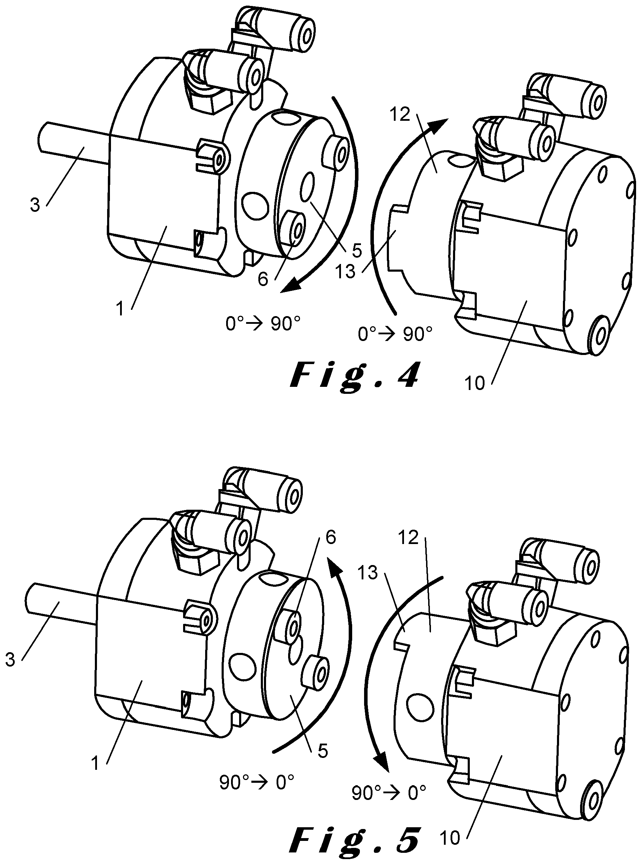

La figure 4 illustre les mouvements rotatifs de chacun des vérins (1, 10) lorsque ladite vanne à contrôler doit effectuer une rotation depuis une première position à 0° jusqu'à une deuxième position à 90°. Pour effectuer une rotation de ladite vanne à contrôler depuis une première position à 0°, par exemple obtenue suite à la mise sous pression du dispositif, jusqu'à une deuxième position à 90°, ledit premier vérin (1) est alimenté en air comprimé par l'intermédiaire d'une première vanne à air comprimé pour que ledit disque rotatif (5) dudit premier vérin (1) effectue une rotation vers la droite depuis une première position à 0° jusqu'à une deuxième position à 90°.

En parallèle, ledit deuxième vérin (10) est alimenté en air comprimé par l'intermédiaire d'une deuxième vanne à air comprimé pour que ledit disque rotatif (12) dudit deuxième vérin effectue une rotation vers la droite depuis une première position à 0° jusqu'à une deuxième position à 90°. Ce mouvement rotatif dudit deuxième vérin (10) permet audit premier vérin (1) d'effectuer une rotation vers la droite, ladite butée rectangulaire médiane (13) dudit disque rotatif dudit deuxième vérin ne bloquant plus les arrêts fixes (6, 7) dudit disque rotatif (5) dudit premier vérin (1) à la position à 0°.

La figure 5 illustre les mouvements rotatifs de chacun des vérins (1, 10) lorsque ladite vanne à contrôler doit effectuer une rotation depuis une première position à 90° jusqu'à une deuxième position à 0°. Pour effectuer une rotation de ladite vanne à contrôler depuis une première position à 90° jusqu'à une deuxième position à 0°, ledit premier vérin (1) est alimenté en air comprimé par l'intermédiaire d'une première vanne à air comprimé pour que ledit disque rotatif (5) dudit premier vérin (1) effectue une rotation vers la gauche depuis une première position à 90° jusqu'à une deuxième position à 0°.

En parallèle, ledit deuxième vérin (10) est alimenté en air comprimé par l'intermédiaire d'une deuxième vanne à air comprimé pour que ledit disque rotatif (12) dudit deuxième vérin (10) effectue une rotation vers la gauche depuis une première position à 90° jusqu'à une deuxième position à 0°. Ledit deuxième vérin (10) présentant un couple deux fois supérieur à celui dudit premier vérin (1), lesdits arrêts fixes (6) dudit disque rotatif (5) dudit premier vérin (1) sont bloqués contre ladite butée rectangulaire médiane (13) dudit disque rotatif (12) dudit deuxième vérin (10) qui est positionné à 0° suite sa rotation. Ainsi, lors de ce mouvement depuis une première position à 90° jusqu'à une deuxième position à 0°, ledit premier vérin (1) est non seulement alimenté en air comprimé mais également poussé par ledit deuxième vérin (10) présentant un couple deux fois supérieur.

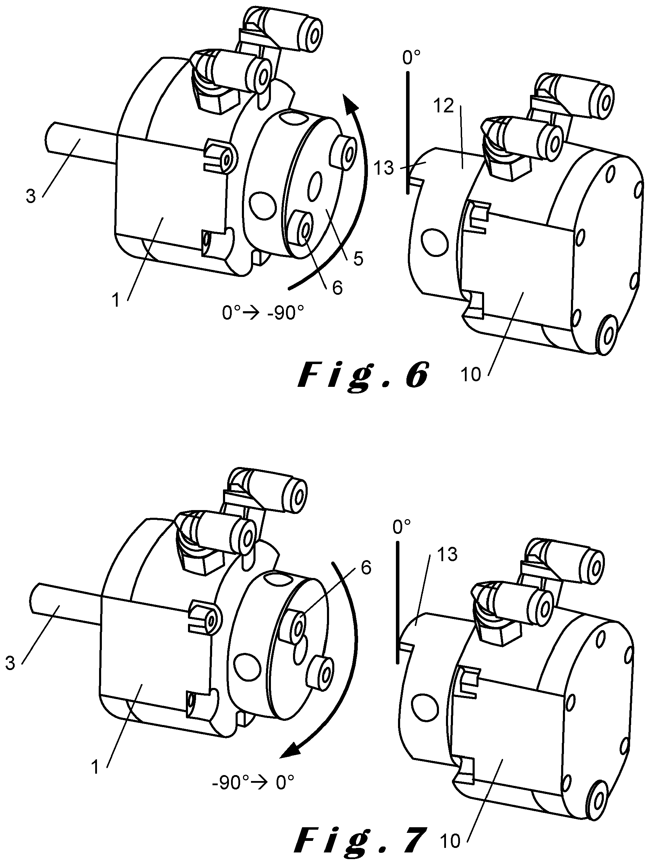

La figure 6 illustre les mouvements rotatifs de chacun des vérins (1, 10) lorsque ladite vanne à contrôler doit effectuer une rotation depuis une première position à 0° jusqu'à une deuxième position à -90°. Pour effectuer une rotation de ladite vanne à contrôler depuis une première position à 0° jusqu'à une deuxième position à -90°, ledit premier vérin (1) est alimenté en air comprimé par l'intermédiaire d'une première vanne à air comprimé pour que ledit disque rotatif (5) dudit premier vérin (1) effectue une rotation vers la gauche depuis une première position à 0° jusqu'à une deuxième position à -90°.

En parallèle, ledit deuxième vérin (10) est alimenté en air comprimé pour rester à la position de 0°. Seul ledit premier vérin (1) effectue donc une rotation jusqu'à ce que lesdits arrêts fixes (6) dudit disque rotatif (5) dudit premier vérin (1) soient bloqués contre ladite butée rectangulaire médiane (13) dudit disque rotatif (12) dudit deuxième vérin (10) présentant deux fois plus de couple que ledit premier vérin (1) et positionné à 0°.

La figure 7 illustre les mouvements rotatifs de chacun des vérins (1, 10) lorsque ladite vanne à contrôler doit effectuer une rotation depuis une première position à -90° jusqu'à une deuxième position à 0°. Pour effectuer une rotation de ladite vanne à contrôler depuis une première position à -90° jusqu'à une deuxième position à 0°, ledit premier vérin (1) est alimenté en air comprimé par l'intermédiaire d'une première vanne à air comprimé pour que ledit disque rotatif (5) dudit premier vérin (1) effectue une rotation vers la droite depuis une première position à -90° jusqu'à une deuxième position à 0°.

En parallèle, ledit deuxième vérin (10) est alimenté en air comprimé pour rester à la position de 0°. Seul ledit premier vérin (1) effectue donc une rotation jusqu'à ce que lesdits arrêts fixes (6) dudit disque rotatif (5) dudit premier vérin (1) soient bloqués contre ladite butée rectangulaire médiane (13) dudit disque rotatif (12) dudit deuxième vérin (10) présentant deux fois plus de couple que ledit premier vérin (1) et positionné à 0°.

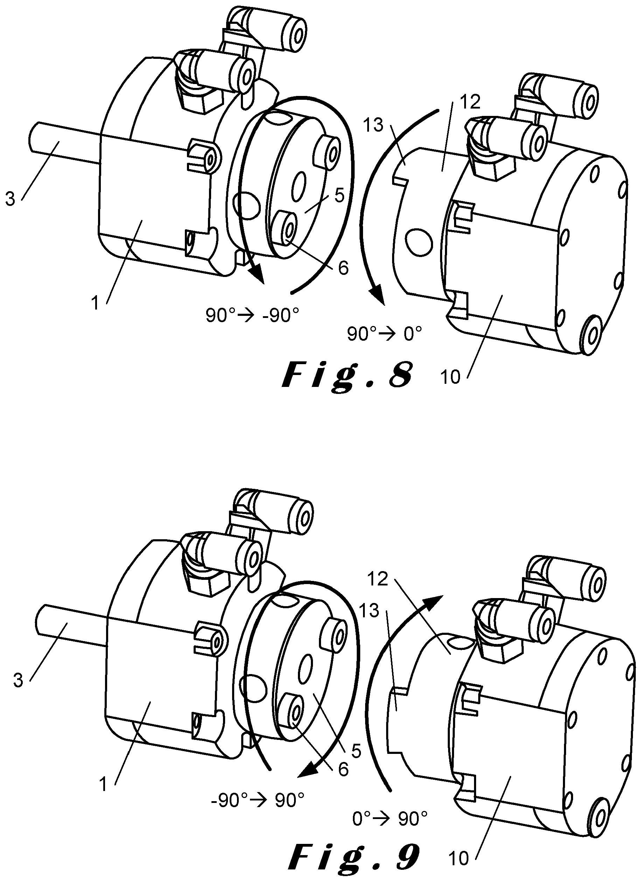

La figure 8 illustre les mouvements rotatifs de chacun des vérins (1, 10) lorsque ladite vanne à contrôler doit effectuer une rotation depuis une première position à 90° jusqu'à une deuxième position à -90°. Pour effectuer une rotation de ladite vanne à contrôler depuis une première position à 90° jusqu'à une deuxième position à -90°, ledit premier vérin (1) est alimenté en air comprimé par l'intermédiaire d'une première vanne à air comprimé et ledit deuxième vérin (10) est alimenté en air comprimé par l'intermédiaire d'une deuxième vanne à air comprimé pour que ledit disque rotatif (5) dudit premier vérin (1) et ledit disque rotatif (12) dudit deuxième vérin (10) effectuent tous les deux une rotation vers la gauche.

Ledit deuxième vérin (10) présentant un couple deux fois supérieur à celui dudit premier vérin (1), ledit premier vérin (1) est entraîné par ledit deuxième vérin (10) jusqu'à la position à 0° mais ledit premier vérin (1) poursuit sa course jusqu'à la position à -90° où lesdits arrêts fixes (6) dudit disque rotatif (5) dudit premier vérin (1) sont bloqués contre ladite butée rectangulaire médiane (13) dudit disque rotatif (12) dudit deuxième vérin (10).

La figure 9 illustre les mouvements rotatifs de chacun des vérins (1, 10) lorsque ladite vanne à contrôler doit effectuer une rotation depuis une première position à -90° jusqu'à une deuxième position à 90°. Pour effectuer une rotation de ladite vanne à contrôler depuis une première position à -90° jusqu'à une deuxième position à 90°, ledit premier vérin (1) est alimenté en air comprimé par l'intermédiaire d'une première vanne à air comprimé et ledit deuxième vérin (10) est alimenté en air comprimé par l'intermédiaire d'une deuxième vanne à air comprimé pour que ledit disque rotatif (5) dudit premier vérin (1) et ledit disque rotatif (12) dudit deuxième vérin (10) effectuent tous les deux une rotation vers la droite.

Une alimentation simultanée desdits premier et deuxième vérins (1, 10) empêche le blocage dudit premier vérin (1) à la position à 0°, ledit premier vérin pouvant ainsi poursuivre sa course jusqu'à la position à 90°.

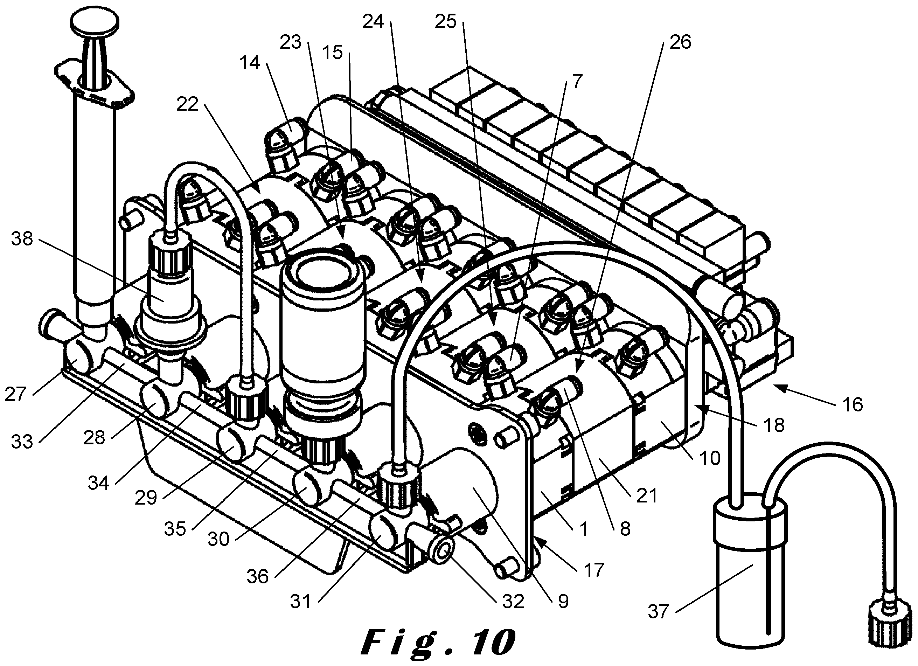

La figure 10 illustre un mode de réalisation du dispositif de contrôle pour le flux d'un fluide dans une conduite selon l'invention. Selon ce mode de réalisation, cinq dispositifs à air comprimé pour le contrôle de vannes (22, 23, 24, 25, 26) sont placés en parallèle et connectés chacun à une vanne à contrôler (27, 28, 29, 30, 31) localisée dans ladite conduite (31), lesdites vannes définissant quatre sections (33, 34, 35, 36), une section étant comprise entre deux vannes successives. Chacun des dispositifs à air comprimé pour le contrôle de vannes (22, 23, 24, 25, 26) comprend les éléments tels que décrits à la Figure 1. Chaque vanne est donc contrôlée individuellement et peut effectuer des rotations dans les deux sens sans avoir à stopper en position intermédiaire.

Selon ce mode de réalisation illustré à la Figure 10, le fluide contenu dans un réservoir (37) est mis sous pression pour entrer dans ladite conduite (32) via la vanne (31) contrôlée par le dispositif à air comprimé pour le contrôle de vannes (26), ladite vanne (31) contrôlant le passage dudit fluide dans la section (36). Suivant les positions respectives de chacune des vannes (27, 28, 29, 30, 31) qui sont contrôlées respectivement par les dispositif à air comprimé pour le contrôle de vannes (22, 23, 24, 25, 26), ledit fluide va être dirigé d'une section à l'autre en passant ou non au travers d'éléments (38) agencés pour traiter ledit fluide. Lesdites vannes pouvant être entraînées selon des rotations dans les deux sens, ledit fluide peut donc passer d'une première section vers une seconde section puis repasser vers ladite première section si nécessaire.

Il est bien entendu que la présente invention n'est en aucune façon limitée aux formes de réalisations décrites ci-dessus et que bien des modifications peuvent y être apportées sans sortir du cadre des revendications annexées.

Par exemple, d'autres réalisations de la présente invention peuvent comporter un ensemble juxtaposé de 2, 3, 4, 5, 6, 7, 8 dispositifs à air comprimé pour le contrôle de vannes voire un nombre infini de dispositifs à air comprimé pour le contrôle de vannes.

Par exemple, le dispositif à air comprimé pour le contrôle de vannes, le dispositif de contrôle pour le flux d'un fluide dans une conduite et la machine de synthèse ou de purification selon l'invention peuvent être utilisés en chimie froide, dans les domaines de la biotechnologie, pour la purification de protéines, la culture cellulaire, etc. En particulier, dès que l'usage de conduites à vannes multiples (manifold, par exemple le 3-way Stopcock® commercialisé par la société Medex) est requis de manière commandée, la présente invention revêt un intérêt considérable.

## Revendications

1. Dispositif à air comprimé pour le contrôle de vannes comprenant, dans une direction longitudinale, un premier vérin rotatif à palette (1) présentant une face frontale (2) ainsi qu'une face dorsale (4), ladite face frontale (2) étant munie d'une tête de rotation (3), et un deuxième vérin rotatif à palette (10) présentant une face frontale (11) ainsi qu'une face dorsale, lesdits premier et deuxième vérins (1, 10) pouvant chacun être alimenté en air comprimé par l'intermédiaire d'une vanne à air comprimé reliées à deux ports (7, 8 ; 14, 15) sur chacun desdits premier (1) et deuxième (10) vérins, ledit premier vérin rotatif à palette (1) étant agencé pour entraîner en rotation ladite vanne à contrôler entre une première position prédéterminée et une deuxième position prédéterminée en un seul mouvement, et ledit deuxième vérin (10) étant agencé pour décrire un angle depuis une première position jusqu'à une deuxième position en un seul mouvement, où ledit premier vérin (1) comprend sur sa face dorsale (4) un disque rotatif (5) pourvu d'arrêts fixes (6) et où ledit deuxième vérin (10) comprend sur sa face frontale (11) un disque rotatif (12) pourvu d'une butée (13), ledit deuxième vérin (10) présentant en outre un couple supérieur à celui dudit premier vérin (1) et lesdits premier (1) et deuxième (10) vérins étant connectés entre eux par emboîtement mutuel, ladite butée (13) dudit disque rotatif (12) dudit deuxième vérin (10) étant agencée pour s'insérer entre lesdits arrêts fixes (6) dudit premier vérin (1) et présentant en outre une largeur étant agencée pour permettre aux arrêts fixes (6) dudit disque rotatif (5) dudit premier vérin (1) d'effectuer une rotation prédéterminée avant d'être bloqués par ladite butée (13).

2. Dispositif à air comprimé pour le contrôle de vannes selon la revendication 1, **caractérisé en ce que** ledit premier vérin rotatif à palette (1) est agencé pour entraîner en rotation ladite vanne à contrôler selon un angle de 180° en un seul mouvement.

3. Dispositif à air comprimé pour le contrôle de vannes selon la revendication 1 ou 2, **caractérisé en ce que** ledit premier vérin rotatif à palette (1) est agencé pour marquer un arrêt à une position intermédiaire prédéterminée comprise entre ladite première position prédéterminée et ladite deuxième position prédéterminée de ladite vanne à contrôler.

4. Dispositif à air comprimé pour le contrôle de vannes selon la revendication 3, **caractérisé en ce que** ladite position intermédiaire dudit premier vérin (1) est atteinte suite à une rotation depuis une position à + 90° jusqu'à une position à 0° ou depuis une position à - 90° jusqu'à une position à 0°.

5. Dispositif à air comprimé pour le contrôle de vannes selon l'une des quelconques revendications 1 à 4, **caractérisé en ce que** ledit deuxième vérin rotatif à palette (10) est agencé pour décrire un angle depuis une première position à 0° jusqu'à une deuxième position à 90° ou depuis une première position à 90° jusqu'à une deuxième position à 0°.

6. Dispositif à air comprimé pour le contrôle de vannes selon l'une des quelconques revendications 1 à 5, **caractérisé en ce que** ledit deuxième vérin rotatif à palette (10) présente un couple deux fois supérieur au couple dudit premier vérin rotatif à palette (1).

7. Dispositif à air comprimé pour le contrôle de vannes selon l'une des quelconques revendications 1 à 6, **caractérisé en ce que** ledit disque rotatif (5) dudit premier vérin (1) présente deux arrêts fixes (6) diamétralement opposés.

8. Dispositif à air comprimé pour le contrôle de vannes selon l'une des quelconques revendications 1 à 7, **caractérisé en ce que** ladite butée (13) dudit disque rotatif (12) dudit deuxième vérin (10) est une butée rectangulaire médiane (13).

9. Dispositif à air comprimé pour le contrôle de vannes selon la revendication 8, **caractérisé en ce que** ladite butée rectangulaire médiane (13) présente une largeur (I) permettant aux arrêts fixes (6) dudit disque rotatif (5) dudit premier vérin (1) d'effectuer une rotation selon un angle de 90° avant d'être bloqués par ladite butée rectangulaire médiane (13).

10. Dispositif à air comprimé pour le contrôle de vannes selon l'une des quelconques revendications 1 à 9, **caractérisé en ce que** lesdits disques rotatifs (5, 12) desdits premier (1) et deuxième (10) vérins sont entourés par une enveloppe ou un cache de protection.

11. Dispositif de contrôle pour le flux d'un fluide dans une conduite (31), comprenant :
- la conduite (31),
- au moins une vanne (21) localisée dans ladite conduite pour contrôler ledit flux dudit fluide passant dans ladite conduite (31), et
- au moins un dispositif à air comprimé pour le contrôle de vannes selon les revendications 1 à 10, chaque dispositif à air comprimé pour le contrôle de vannes pouvant être respectivement associé à une vanne (21) localisée dans ladite conduite (31).

12. Dispositif de contrôle pour le flux d'un fluide dans une conduite (31) selon la revendication 11, **caractérisé en ce que** ladite conduite (31) est une conduite d'une cassette à usage unique.

13. Dispositif de contrôle pour le flux d'un fluide dans une conduite (31) selon la revendication 12, **caractérisé en ce que** ladite cassette à usage unique comprend au moins une vanne (21), ladite au moins une vanne (21) étant agencée pour être fixée à ladite tête de rotation (3) dudit premier vérin (1) d'un dispositif à air comprimé pour le contrôle de vannes.

14. Dispositif de contrôle pour le flux d'un fluide dans une conduite (31) selon la revendication 13, **caractérisé en ce que** ladite fixation de ladite vanne à ladite tête de rotation (3) dudit premier vérin (1) est réalisée par l'intermédiaire d'un élément de liaison (9) solidaire de ladite tête de rotation (3) dudit premier vérin (1) et agencé pour s'emboîter sur ladite vanne à contrôler.

15. Machine de synthèse ou de purification d'éléments radioactifs agencée pour recevoir une cassette à usage unique et comprenant une unité de contrôle commandant la rotation des vannes depuis une première position prédéterminée jusqu'à une deuxième position prédéterminée, **caractérisée en ce qu'**elle comprend au moins un dispositif à air comprimé pour le contrôle de vannes selon les revendications 1 à 10.

## Patentansprüche

1. Druckluftvorrichtung zur Ventilsteuerung, umfassend in einer Längsrichtung einen ersten Drehflügelantrieb (1) mit einer Vorderseite (2) und einer Rückseite (4), wobei die Vorderseite (2) mit einem Rotationskopf (3) ausgerüstet ist, und einen zweiten Drehflügelantrieb (10) mit einer Vorderseite (11) und einer Rückseite, wobei der erste und der zweite Antrieb (1, 10) über ein Druckluftventil, das mit zwei Anschlüssen (7, 8; 14, 15) auf jedem des ersten (1) und zweiten (10) Antriebs verbunden ist, jeweils mit Druckluft versorgt werden können, wobei der erste Drehflügelantrieb (1) so angeordnet ist, dass er das zu steuernde Ventil zwischen einer ersten vorbestimmten Position und einer zweiten vorbestimmten Position in einer einzigen Bewegung in Drehung versetzt und der zweite Antrieb (10) so angeordnet ist, dass er einen Winkel von einer ersten Position zu einer zweiten Position in einer einzigen Bewegung beschreibt, wobei der erste Antrieb (1) an seiner Rückseite (4) eine mit festen Arretierungen (6) versehene drehbare Scheibe (5) umfasst und wobei der zweite Antrieb (10) an seiner Vorderseite (11) eine drehbare Scheibe (12) mit einem Anschlag (13) umfasst, wobei der zweite Antrieb (10) weiter ein größeres Drehmoment als das des ersten Antriebs (1) aufweist und der erste (1) und der zweite (10) Antrieb durch wechselseitigen Eingriff miteinander verbunden sind, wobei der Anschlag (13) der drehbaren Scheibe (12) des zweiten Antriebs (10) so angeordnet ist, dass er zwischen die festen Arretierungen (6) des ersten Antriebs (1) eingefügt wird und weiter eine Breite aufweist, die so angeordnet ist, dass die festen Arretierungen (6) der drehbaren Scheibe (5) des ersten Antriebs (1) eine vorbestimmte Drehung ausführen können, bevor sie durch den Anschlag (13) blockiert werden.

2. Druckluftvorrichtung zur Ventilsteuerung nach Anspruch 1, **dadurch gekennzeichnet, dass** der erste Drehflügelantrieb (1) so angeordnet ist, dass er das zu steuernde Ventil gemäß einem Winkel von 180° in einer einzigen Bewegung in Drehung versetzt.

3. Druckluftvorrichtung zur Ventilsteuerung nach Anspruch 1 oder 2, **dadurch gekennzeichnet, dass** der erste Drehflügelantrieb (1) so angeordnet ist, dass er an einer vorbestimmten Zwischenposition zwischen der ersten vorbestimmten Position und der zweiten vorbestimmten Position des zu steuernden Ventils anhält.

4. Druckluftvorrichtung zur Ventilsteuerung nach Anspruch 3, **dadurch gekennzeichnet, dass** die Zwischenposition des ersten Antriebs (1) nach einer Drehung von einer Position bei +90° bis zu einer Position bei 0° oder von einer Position bei -90° bis zu einer Position bei 0 °C erreicht ist.

5. Druckluftvorrichtung zur Ventilsteuerung nach einem der Ansprüche 1 bis 4, **dadurch gekennzeichnet, dass** der zweite Drehflügelantrieb (10) so angeordnet ist, dass er einen Winkel von einer ersten Position bei 0° bis zu einer zweiten Position bei 90° oder von einer ersten Position bei 90° bis zu einer zweiten Position bei 0 °C beschreibt.

6. Druckluftvorrichtung zur Ventilsteuerung nach einem der Ansprüche 1 bis 5, **dadurch gekennzeichnet, dass** der zweite Drehflügelantrieb (10) ein doppelt so großes Drehmoment wie das Drehmoment des ersten Drehflügelantriebs (1) aufweist.

7. Druckluftvorrichtung zur Ventilsteuerung nach einem der Ansprüche 1 bis 6, **dadurch gekennzeichnet, dass** die drehbare Scheibe (5) des ersten Antriebs (1) zwei feste Arretierungen (6) aufweist, die einander diametral gegenüberliegen.

8. Druckluftvorrichtung zur Ventilsteuerung nach einem der Ansprüche 1 bis 7, **dadurch gekennzeichnet, dass** der Anschlag (13) der drehbaren Scheibe (12) des zweiten Antriebs (10) ein in der Mitte liegender rechteckiger Anschlag (13) ist.

9. Druckluftvorrichtung zur Ventilsteuerung nach Anspruch 8, **dadurch gekennzeichnet, dass** der in der Mitte liegende rechteckige Anschlag (13) eine Breite (I) aufweist, die es den festen Arretierungen (6) der drehbaren Scheibe (5) des ersten Antriebs (1) ermöglicht, eine Drehung gemäß einem Winkel von 90° auszuüben, bevor sie von dem in der Mitte liegenden rechteckigen Anschlag (13) blockiert werden.

10. Druckluftvorrichtung zur Ventilsteuerung nach einem der Ansprüche 1 bis 9, **dadurch gekennzeichnet, dass** die drehbaren Scheiben (5, 12) des ersten (1) und des zweiten Antriebs (10) von einer Umhüllung oder einer Schutzkappe umgeben sind.

11. Vorrichtung zur Steuerung eines Fluidstroms in einer Leitung (31), umfassend:
- die Leitung (31),
- mindestens ein Ventil (21), das sich zur Steuerung des Fluidstroms, der durch diese Leitung (31) fließt, in dieser Leitung befindet und
- mindestens eine Druckluftvorrichtung zur Ventilsteuerung nach einem der Ansprüche 1 bis 10, wobei jede Druckluftvorrichtung zur Ventilsteuerung jeweils einem, in der Leitung (31) befindlichen Ventil (21) zugeordnet werden kann.

12. Vorrichtung zur Steuerung eines Fluidstroms in einer Leitung (31) nach Anspruch 11, **dadurch gekennzeichnet, dass** die Leitung (31) eine Leitung einer Kassette zum einmaligen Gebrauch ist.

13. Vorrichtung zur Steuerung des Fluidstroms in einer Leitung (31) nach Anspruch 12, **dadurch gekennzeichnet, dass** die Kassette zum einmaligen Gebrauch mindestens ein Ventil (21) umfasst, wobei das mindestens eine Ventil (21) so angeordnet ist, dass es am Rotationskopf (3) des ersten Antriebs (1) einer Druckluftvorrichtung zur Ventilsteuerung befestigt wird.

14. Vorrichtung zur Steuerung eines Fluidstroms in einer Leitung (31) nach Anspruch 13, **dadurch gekennzeichnet, dass** die Befestigung des Ventils am Rotationskopf (3) des ersten Antriebs (1) über ein Verbindungselement (9) erfolgt, das mit dem Rotationskopf (3) des ersten Antriebs (1) fest verbunden und so angeordnet ist, dass es auf dem zu steuernden Ventil aufsitzt.

15. Maschine zum Synthetisieren oder Aufreinigen von radioaktiven Elementen, angeordnet zur Aufnahme einer Kassette zum einmaligen Gebrauch und umfassend eine Steuereinheit, die die Drehung der Ventile von einer ersten vorbestimmten Position bis zu einer zweiten vorbestimmten Position steuert, **dadurch gekennzeichnet, dass** die Maschine mindestens eine Druckluftvorrichtung zur Steuerung der Ventile nach den Ansprüchen 1 bis 10 umfasst.

## Claims

1. Compressed-air device for controlling valves, comprising, in a longitudinal direction, a first vane-type rotary cylinder (1), having a front face (2) as well as a back face (4), said front face (2) being provided with a rotation head (3), and a second vane-type rotary cylinder (10), having a front face (11) as well as a back face, said first and second cylinders (1, 10) each being able to be supplied with compressed air by means of a compressed-air valve connected to two ports (7, 8; 14, 15) on each of said first (1) and second (10) cylinders, said first vane-type rotary cylinder (1) being arranged to rotate said valve to be controlled between a first predetermined position and a second predetermined position in a single motion, and said second cylinder (10) being arranged to describe an angle from a first position to a second position in a single motion, wherein said first cylinder (1) comprises, on its back face (4), a rotary disc (5) provided with stationary edges (6) and wherein said second cylinder (10) comprises, on its front face (11), a rotary disc (12) provided with a stop (13), said second cylinder (10) further having a torque greater than that of said first cylinder (1), and said first (1) and second (10) cylinders being connected to each other by mutual interlocking, said stop (13) of said rotary disc (12) of said second cylinders (10) being arranged to be inserted between said stationary edges (6) of said first cylinder (1) and further having a width being arranged to enable the stationary edges (6) of said rotary disc (5) of said first cylinder (1) to make a predetermined rotation before being blocked by said stop (13).

2. Compressed-air device for controlling valves according to claim 1, **characterised in that** said first vane-type rotary cylinder (1) is arranged to rotate said valve to be controlled through an angle of 180° in a single motion.

3. Compressed-air device for controlling valves according to claim 1 or claim 2, **characterised in that** said first vane-type rotary cylinder (1) is arranged to stop at a predetermined intermediate position comprised between said first predetermined position and said second predetermined position of said valve to be controlled.

4. Compressed-air device for controlling valves according to claim 3, **characterised in that** said intermediate position of said first cylinder (1) is reached following a rotation from a position at +90° to a position at 0° or from a position at -90° to a position at 0°.

5. Compressed-air device for controlling valves according to any of claims 1 to 4, **characterised in that** said second vane-type rotary cylinder (10) is arranged to describe an angle from a first position at 0° to a second position at 90° or from a first position at 90° to a second position at 0°.

6. Compressed-air device for controlling valves according to any of claims 1 to 5, **characterised in that** said second vane-type rotary cylinder (10) has a torque twice the torque of said first vane-type rotary cylinder (1).

7. Compressed-air device for controlling valves according to any of claims 1 to 6, **characterised in that** said rotary disc (5) of said first cylinder (1) has two diametrically opposed stationary edges (6).

8. Compressed-air device for controlling valves according to any of claims 1 to 7, **characterised in that** said stop (13) of said rotary disc (12) of said second cylinder (10) is an intermediate rectangular stop (13).

9. Compressed-air device for controlling valves according to claim 8, **characterised in that** said intermediate rectangular stop (13) has a width (I) enabling the stationary edges (6) of said rotary disc (5) of said first cylinder (1) to rotate through an angle of 90° before being blocked by said intermediate rectangular stop (13).

10. Compressed-air device for controlling valves according to any of claims 1 to 9, **characterised in that** said rotary discs (5, 12) of said first (1) and second (10) cylinders are surrounded by a protective envelope or cover.

11. A control device for the flow of a fluid in a pipe (31), comprising:
- the pipe (31),
- at least one valve (21) located in said pipe for controlling said flow of said fluid passing through said pipe (31), and
- at least one compressed-air device for controlling valves according to claims 1 to 10, each compressed-air device for controlling valves being able to be respectively associated with a valve (21) located in said pipe (31).

12. Control device for the flow of a fluid in a pipe (31) according to claim 11, **characterised in that** said pipe (31) is a pipe of a single-use cassette.

13. Control device for the flow of a fluid in a pipe (31) according to claim 12, **characterised in that** said single-use cassette comprises at least one valve (21), said at least one valve (21) being arranged so as to be fixed to said rotation head (3) of said first cylinder (1) of a compressed-air device for controlling valves.

14. Control device for the flow of a fluid in a pipe (31) according to claim 13, **characterised in that** said fixing of said valve to said rotation head (3) of said first cylinder (1) is effected by means of a connection element (9) secured to said rotation head (3) of said first cylinder (1) and arranged to interlock on said valve to be controlled.

15. Machine for the synthesis or purification of radioactive elements arranged to receive a single-use cassette comprising a control unit controlling the rotation of the valves from a first predetermined position to a second predetermined position, **characterised in that** it comprises at least one compressed-air device for controlling valves according to claims 1 to 10.
